# EUROPEAN PATENT SPECIFICATION

(11) **EP 3 006 965 B1**
(45) Date of publication and mention of the grant of the patent: **06.01.2021**
(21) Application number: 15188475.6
(22) Date of filing: 06.10.2015
(51) Int. Cl.: G01V 1/20, G01V 1/38, B63B 21/66

(54) **APPARATUS AND METHOD FOR CABLE DYNAMICS SUPPRESSION**
VORRICHTUNG UND VERFAHREN ZUR UNTERDRÜCKUNG VON KABELDYNAMIK
APPAREIL ET PROCÉDÉ DE SUPPRESSION DE DYNAMIQUE DE CÂBLE

(30) Priority: 08.10.2014 US 201414509137; 23.10.2014 US 201414521608
(43) Date of publication of application: 13.04.2016
(73) Proprietor: Sercel, Inc., Houston, Texas 77084-5935 (US)
(72) Inventor: CERNIWAY, Matthew, Houston, Texas 77084-5935 (US); MAPLES, Michael, Houston, Texas 77084-5935 (US); MELLIER, Gaetan, Houston, Texas 77084-5935 (US); WEST, Phillip, Houston, Texas 77084-5935 (US)
(74) Representative: Ipsilon

(56) References cited:
- EP-A2- 0 171 936
- US-A- 4 628 851
- US-A- 5 062 085
- US-A- 5 641 248
- US-A1- 2004 013 036
- US-A1- 2013 114 374

## Description

### BACKGROUND

### TECHNICAL FIELD

Embodiments of the subject matter disclosed herein generally relate to an apparatus and method for cable dynamics suppression.

### DISCUSSION OF THE BACKGROUND

An electro-mechanical cable may be a cable, such as, for example, a marine-seismic cable (also called streamer), including sensor components, data-transmission cables, power-transmission cables and strength enhancing and buoyancy enhancing components arranged in a single cable. A marine-seismic cable may be an electro-mechanical cable used for gathering data on the nature and composition of the earth below a body of water using seismic imaging techniques. The marine-seismic cable, or seismic streamer, may be designed to reduce hydrodynamic induced flow noise. For example, the marine seismic cable may be cylindrical.

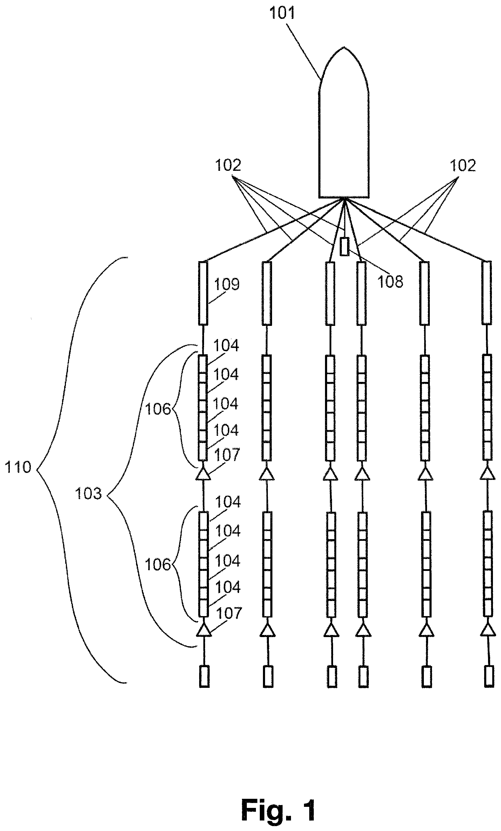

Figure 1 depicts an exemplary marine-seismic cable system in use. A marine vessel 101, including a lead-in towing assembly 102, may deploy and tow electro-mechanical cables 103, on or below the surface of the water. The electro-mechanical cables 103 may be of any suitable length and may be made up of shorter connected sections 106 of electro-mechanical cabling which may also be of any suitable length. For example, an electro-mechanical cable 103 may be kilometers in length, with each section 106 being, for example, 75 meters to 200 meters in length. The sections 106 may be detachable from each other. The electro-mechanical cable 103 may be, for example, a marine-seismic cable or seismic streamer. Seismic-imaging systems may make use of more than one electro-mechanical cable 103. The electro-mechanical cables 103 may be deployed as a single section 106, a linear series of sections 106, or as a horizontal offset series of sections 106, producing a sensor field.

Sections 106 of the electro-mechanical cables 103 may include various sensor components 104. The sensor components 104 may be, for example, hydrophones, geophones, accelerometers, electro-magnetic sensors, optical sensors, gravity sensors, or a combination thereof and may be distributed at regular intervals along the electro-mechanical cables 103. An outer jacket around the electro-mechanical cable 103 may be, for example, a polyurethane jacket, and may be smooth in order minimize noise in the sensor components 104. A buoyant material may be contained in the electro-mechanical cable 103, and may help keep the electro-mechanical cable 103 level on top of or under the water.

A seismic source 108 may be used to produce a shockwave, using any suitable manner of generating acoustic energy. The seismic source may include one or more air guns or vibratory elements. When conducting an acoustic survey, the shockwave may be reflected by the geologic features of the sea floor and picked up by the sensor components 104. Vibrations emanating from the head of the streamer field (or streamer spread) 110, near the marine vessel 101, may contaminate the seismic signals measured by the sensor components 104. Radial vibration isolation modules 109 may be placed between the towing assembly 102 and the electro-mechanical cables 103, at the head of the streamer field 110, in order to mitigate the transmission of vibration noise. There are several types of radial vibration isolation modules 109 that may be used in electro-mechanical cables 103 at the head of the streamer field 110. Each of the available types of radial vibration isolation modules 109 may include a single stretch section with vibration attenuation that occurs due to a complex spring rate of the radial vibration isolation module 109. Radial vibration isolation modules 109 may be tailored to attenuate vibration over the frequency bandwidth of 2 to 250 Hz, which may be common in seismic acquisition.

The electro-mechanical cables 103 may each include one or more positioning devices, also known as birds 107. Birds 107 may include control surfaces that may be used to position the electro-mechanical cables 103. For example, the birds 107 may be used to maintain the electro-mechanical cables 103, to which they are attached, in a known and controllable position relative to other electro-mechanical cables 103. The birds 107 are capable of moving the electro-mechanical cables 103. The electro-mechanical cables may also include attached recovery nodes, which may be devices clamped to the outsides of the electro-mechanical cables 103 that may include sensors (pressure sensors) that monitor for when the electro-mechanical cables 103 pass a given depth. The recovery nodes may include an inflatable portion that may inflate if an electro-mechanical cable 103 has sunk too far into the water, causing the electro-mechanical cable 103 to float back to the surface where it can be retrieved.

Because the electro-mechanical cables 103 are deployed in a viscous fluid, for example, water, the electro-mechanical cables 103 are subject to energy sources from both man-made sources, such as energy transmitted through the tow assembly 102, or energy from the propulsion system of the marine vessel 101, and natural sources, such as wave motion and weather. The energy from these sources may diminish the quality of the seismic data recorded by the sensor components 104, as they may interfere with the signal from the acoustic energy reflected off the sea floor. Thus, the signal measured by the sensor components 104 of an electro-mechanical cable 103 may be divided into two parts, the "signal" pertaining to the geophysical structure of the sea floor, and "noise," which may be picked up from other man-made or natural sources. The signal is desired while the noise contaminates the signal.

Existing noise suppression hardware, such as the radial vibration isolation modules 109, which are concentrated at the head of the streamer field 110, between the towing assembly 102 and the electro-mechanical cables 103, do or may not provide a sufficient level of noise abatement. Notably because devices that operate over such a wide frequency bandwidth, e.g., 2-250 Hz, are typically a result of compromise, sacrificing performance in one frequency region to handle another. The "noise" experienced by electro-mechanical cables 103 may be both spatially dependent, varying depending on the position within the streamer field 110, and frequency dependent. Thus, there is a need for an apparatus and method for cable dynamics suppression (also called vibration mitigation) that removes more noise than the existing devices and thus overcome the problems mentioned above.

Document US 2013/0114374 discloses the use of stretch sections at different locations of a streamer for providing an elastic coupling and attenuating consequently the vibratory noise caused by the motion of the different components of the system in the water, a stretch section being characterized by a spring constant and a damping coefficient which are dynamically adjustable in situ by suitable control of a motor and control valve. The number of spring means may be varied to vary the spring constant of a stretch section, based on an expected amount of drag and the desired frequency to be attenuated. Document EP 0 171 936 A2 discloses the use of vibration isolation sections interposed between an array of hydrophones and a towing cable at the front and between the array and the tail rope at the rear for attenuating axial vibrations, said isolation section comprising a flexible tube, three nylon rope strain wires running the length of the section, several bulkheads of high acoustic impedance at discrete and mechanical intermediate spacers. The placement of the bulkheads within the section is determined by the optimum distances required to attenuate the vibrational energy at the peak input frequency.

### SUMMARY

In various embodiments, an apparatus and method are provided for vibration mitigation. The apparatus is defined by the features of claim 1.

According to a particular aspect, the apparatus is adapted to attenuate vibrations experienced by a section of at least one electro-mechanical cable of a streamer spread for conducting a seismic survey, said section of at least one electro-mechanical cable comprising at least one sensor component for collecting seismic data. The apparatus is configured to be coupled to said section of at least one electro-mechanical cable and positioned next to said section of at least one electro-mechanical cable based on calculations performed prior to collecting the seismic data.

According to another particular aspect, the apparatus further comprises one other tuned elastic section; and an inter-module connector. The one other tuned elastic sections is coupled to a first end of the inter-module connector with a high impedance material interface, and the one of the one or more tuned elastic sections is coupled to a second end of the inter-module connector with a high impedance material interface. The high impedance material interface is adapted to create a high impedance mismatch that prohibit the transmission of energy using one or more of physical properties comprising density and elasticity and variations in coupling geometry.

According to another particular aspect, one of the one or more tuned elastic sections has a different length than the one other tuned elastic section.

According to another particular aspect, the one other tuned elastic section is adapted to attenuate vibrations in a specified frequency range that is different from the specified frequency range for one of the one or more tuned elastic sections.

According to another particular aspect, the equipment for the attenuation of axial vibrations comprises a rod ; and a chamber. The one or more springs are arranged on the rod within the chamber such that a motion of a plunger towards the base of the chamber compresses the springs between the plunger and the base of the chamber.

According to another particular aspect, the apparatus further comprises a male coupling ; and a female coupling. The chamber is disposed in between the male coupling and the female coupling. The rod is mechanically linked to one of the male coupling and the female coupling, the opening of the chamber is mechanically linked to the other of the male coupling and the female coupling, and motion of the male coupling away from the female coupling causes compression of the one or more springs.

According to another particular aspect, the flexure is beam-type multi-axis flexure comprising two or more flexure sets, wherein the flexure is an elastomeric multi-axis flexure. Two of the two or more flexure sets are connected to each other at an angle of at least 90 degrees.

According to another particular aspect, at least one section for suppression of motion is disposed within a section of the electro-mechanical cable. The section of the electro-mechanical cable further comprises at least one sensor component, or within a radial vibration isolation module of the electro-mechanical cable.

Another object is a method for preparing an apparatus for vibration mitigation according to claim 9.

According to another particular aspect, the method comprises determining a tension band for vibrations in the electro-mechanical cable caused by the forces experienced by electro-mechanical cable; selecting the at least one of one or more springs to produce a digressive stiffness curve based on the determined tension bands.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 depicts an exemplary marine-seismic cable system in use;
Figure 2 depicts an exemplary cable dynamics isolator;
Figure 3 depicts an exemplary portion of a cable dynamics isolator (also called tuned elastic section) including a chamber, a rod, and disk springs;
Figure 4 depicts an exemplary multi-axis flexure;
Figure 5a depicts an exemplary disk spring;
Figure 5b depicts an exemplary cross-sectional view of a disk spring;
Figure 6 depicts an exemplary electro-mechanical cable with cable dynamics isolators;
Figures 7a and7b depict exemplary graphs representing the dynamics of a cable dynamics isolator.
Figure 8 depicts an exemplary procedure for preparing a cable dynamics isolator.
Figure 9 depicts an exemplary procedure for a cable dynamics isolator.
Figure 10 depicts an exemplary procedure for preparing a vibration mitigation assembly, also called apparatus for vibration mitigation, with sequential impedance optimization.
Figure 11 depicts an exemplary vibration mitigation assembly;
Figure 12 depicts an exemplary marine-seismic cable system with vibration mitigation assemblies;
Figure 13 depicts an exemplary streamer spread that uses vibration mitigation assemblies.

### DETAILED DESCRIPTION

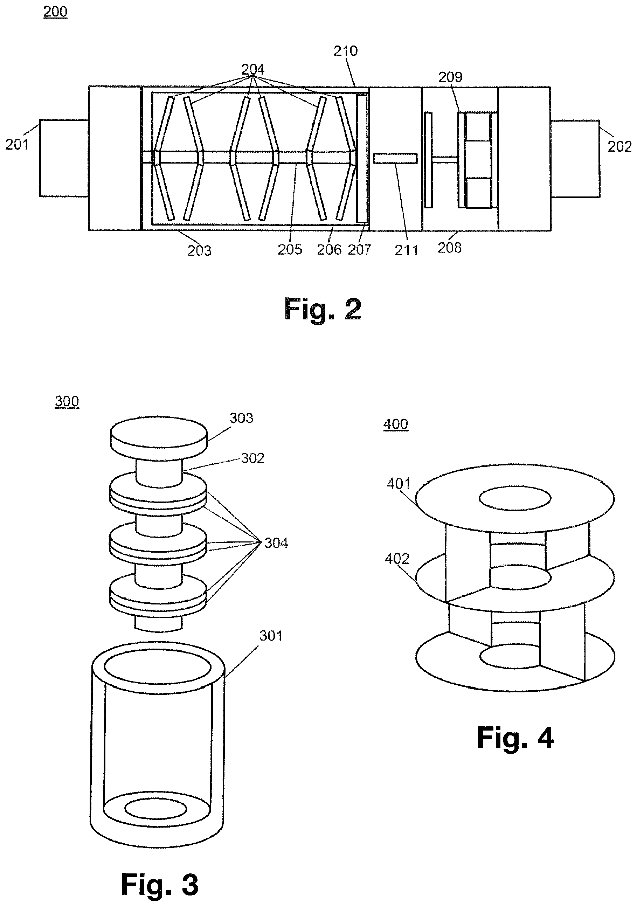

The following description of the exemplary embodiments refers to the accompanying drawings. The same reference numbers in different drawings identify the same or similar elements. The following detailed description does not limit the invention. Instead, the scope of the invention is defined by the appended claims. In various embodiments as illustrated in Figures 2-9, a cable dynamics isolator (also called tuned elastic section) is included in an electro-mechanical cable for cable dynamics suppression via non-linear single and/or multi-axis flexures.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

As discussed above, existing noise suppression hardware, such as the radial vibration isolation modules 109, are concentrated at the head of the streamer field 110, between the towing assembly 102 and the electro-mechanical cables 103. This placement may be based on an assumption that the primary source of cable borne vibration precedes the head of the streamer field 110, and that transverse and axial motion within the electro-mechanical cables 103 derives from axial motion of the electro-mechanical cables 103. However, it was observed that noise generated in front of the head of the streamer field 110 may decay rapidly, and noise picked up by the sensor components 104 of the electro-mechanical cables 103 may originate with the birds 107, as well as with the recovery nodes or other existing nodes that are attached to the electro-mechanical cables 103. It has also been observed that the birds 107, the recovery nodes or other nodes may introduce noise along all axes of movement of the electro-mechanical cables 103, including the x, y, z, and rotational axes. Thus, a new device is necessary for removing the noise and also the position of the new or existing devices needs to be adapted to the characteristics of the streamer.

In this regard, Figure 2 depicts a cable dynamics isolator 200 (also called tuned elastic section). Cable dynamics isolator 200 may include male and female couplings 201 and 202, and a housing 210 that may contain an axial motion suppression section 203 and/or a bending and rotational motion suppression section 208. The male and female couplings 201 and 202 may allow the cable dynamics isolator 200 to be coupled to any of the components of an electro-mechanical cable 103, such as the sections 106 with sensor components 104 and the birds 107. For example, the cable dynamics isolator 200 may be coupled to one of the birds 107 and to one of the sections 106 along the length of one of the electro-mechanical cables 103 using the male and female couplings 201 and 202. Alternatively, the cable dynamics isolator 200 may be coupled between two consecutive sections 106. In one application, the cable dynamics isolator 200 may be coupled between a section 106 and the towing assembly 102 in Figure 1. In still another application, two or more cable dynamics isolator 200 are connected to each other before being connected to the sections. In yet another application, the cable dynamics isolator 200 may be built into one or more sections 106 of the streamer, or into a radial vibration isolation module 109.

Housing 210 may be any suitable housing, of any suitable material and any suitable shape for marine use. For example, housing 210 may be a cylindrical polyurethane jacket. Housing 210 may cover the axial motion suppression section 203 and the bending and rotational motion suppression section 208. Housing 210 may be flexible and stretchable, allowing for some motion of the components of the cable dynamics isolator 200.

The axial motion suppression section 203 may include any suitable equipment for the suppression of axial motion in the cable dynamics isolator 200. For example, the axial motion suppression section 203 may include disk springs 204, arranged along a rod 205, having a plunger 207, inside of a chamber 206. Note that rod 205 does not seal chamber 206 and does not have to have an exterior diameter that matches an interior diameter of chamber 206. In other words, the exterior diameter of plunger 207 may be substantially less than the interior diameter of chamber 206. The rod 205 may be attached, or mechanically linked, to the male coupling 201 or the female coupling 202, for example, by being welded or bolted to the male coupling 201 or the female coupling 202, such that motion of the male coupling 201 or the female coupling 202 may be transmitted to the rod 205. Chamber 206 may be attached, or mechanically linked, to the male coupling 201 or the female coupling 202, whichever is not attached to the rod 205, such that motion of the male coupling 201 or the female coupling 202 may be transmitted to chamber 206. The rod 205 and the chamber 206 may be directly attached to the male coupling 201 and the female coupling 202, or may be indirectly linked to the male coupling 201 and the female coupling 202, for example, by being attached to a part of the cable dynamics isolator 200 that is in turn attached to the male coupling 201 and the female coupling. The rod 205 may be inserted into the chamber 206, with the shaft of the rod 205 going through an appropriately sized opening in the base of the chamber 206. The rod 205 and the chamber 206 may be made from any suitable material, and may be in any suitable shape for use within the housing 210 of the cable dynamics isolator 200. For example, the rod 205 and the chamber 206 may be cylindrical.

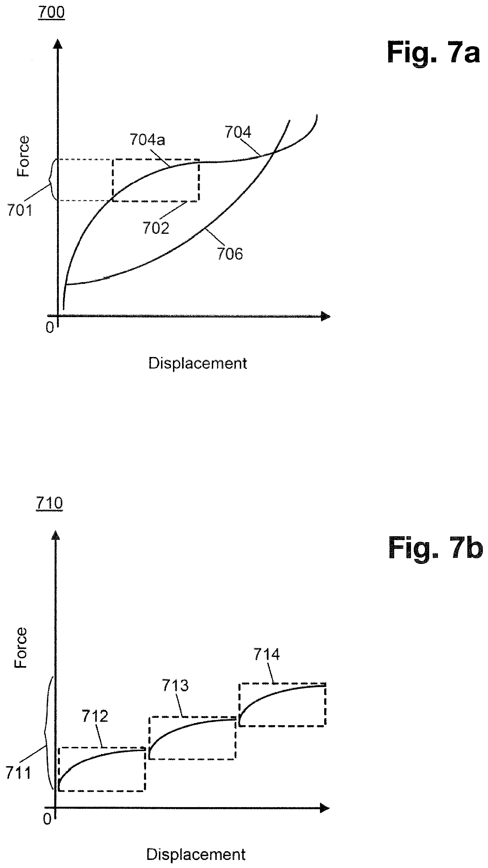

The disk springs 204 may be of any suitable size and made of any suitable material, including metals and composites, and may have a deflection curve that is non-linear and digressive as discussed later with regard to Figure 7a. Any number of disk springs 204 may be arranged along the rod 205 in any suitable manner, for example, in a parallel, in series, or any combination thereof. For example, the number and arrangement of disk springs 204 used in the cable dynamics isolator 200 may depend on the nature, length, diameter, etc. of the electro-mechanical cable 103 to which the cable dynamics isolator 200 may be attached, and the location of attachment. In other words, the cable dynamics isolator 200 has a "tuning" capability that may be exploited by the seismic survey's operator to achieve the best damping/attenuation of the noise propagating along the streamer.

The rod 205 and the chamber 206 may be arranged such that motion of the male and female coupling 201 and 202 away from each other may cause compression of the disk springs 204. For example, the cable dynamic isolator 200 may experience tension which may pull the female coupling 202 away from the male coupling 201. The chamber 206, attached to the female coupling 202, may also move away from the male coupling 201. This may result in the base of the chamber 206 compressing the disk springs 204, starting with the disk springs 204 nearest the male coupling 201. When the male coupling 201 moves away from the female coupling 202, the rod 205 may move with the male coupling 201, which may cause the plunger 207 to compress the disk springs 204 starting with the disk springs 204 closest to the female coupling 202. The disk springs 204, rod 205, and chamber 206 may have an ultra-low spring rate (as discussed later), while still being able to support high tensions such as those found within an electro-mechanical cable 103. The action of the disk springs 204, rod 205, and chamber 206, may serve to suppress the transmission of axial motion through the cable dynamic isolator 200, for example, attenuating axial vibrations transmitted through the electro-mechanical cable 103 due to tension induced by the towing of the electro-mechanical cable 103 and drag of the electro-mechanical cable 103. This may reduce the noise experienced by the sensor components 104. Any other suitable spring shape may also be used in place of the disk springs 204.

The axial motion suppression section 203 may also use dampers to inhibit free vibration along longitudinal axis. The flow path between Belleville sets may be controlled and filled with the appropriate fluid. Select friction materials may be included at sliding points to implement coulomb damping.

The bending and rotational motion suppression section 208 may include any suitable equipment for the suppression of rotational motion and bending in the cable dynamics isolator 200. For example, the bending and rotational motion suppression section 208 may include a multi-axis flexure 209. The multi-axis flexure 209 may be a 3-axis flexure with low bending stiffness in one direction, a higher bending stiffness in the other two directions, and may support large axial tensile loads. Two or more flexure sets, oriented at a minimum of 90 degrees to each other, may be used in the multi-axis flexure 209. This may allow the multi-axis flexure to suppress bending, or transverse motion, regardless of orientation of the cable dynamics isolator 200. The multi-axis flexure 209 may also attenuate rotational motion. The multi-axis flexure 209 may be made of any suitable material. The action of the multi-axis flexure 209 may suppress transmission of bending and rotational motion through the cable dynamic isolator 200, for example, attenuating vibrations from bending and rotational motion transmitted from one of the birds 107, reducing the noise experienced by the sensor components 104. The bending and rotational motion suppression section 208 may also use friction pads for coulomb damping and fluid filled bladders or pockets may provide viscous damping.

The cable dynamics isolator 200 may also include sensors 211. The sensors 211 may be any suitable sensors or instrumentation for monitoring the performance of the cable dynamics isolator 200. For example, the cable dynamics isolator 200 may include, within the housing 210, any combination of sensors 211 that may be, for example, accelerometers to measure acceleration, force sensors for the measurement of force, and strain gages for the measurement of strain within the cable dynamics isolator 200.

Figure 3 depicts an exemplary portion of a cable dynamics isolator including a chamber, a rod, and disk springs. The portion of the cable dynamics isolator 300 used in the axial motion suppression section 203 may include chamber 301, rod 302 with plunger 303, and disk springs 304. The disk springs 304 may be arranged in any suitable manner along the rod 302. For example, several pairs of the disk springs 304 may be arranged along the rod 302, with each pair including two disk springs 304 in series, touching at their base. The rod 302 may be inserted into the chamber 301, such that the disk springs 304 may be compressed between the bottom of the chamber 301 and the plunger 303 based on motion of either the chamber 301 or the rod 302.

Figure 4 depicts an exemplary multi-axis flexure. Note that a single axis flexure may be used. A multi-axis flexure 400 may be, for example, a beam-type flexure, and may include flexure sets 401 and 402. The flexure sets 401 and 402 may be oriented at a minimum of a 90 degree angle with respect to each other, and may in combination absorb rotational motion and bending. The multi-axis flexure 400 may include any number of flexure sets oriented similarly to the flexure sets 401 and 402.

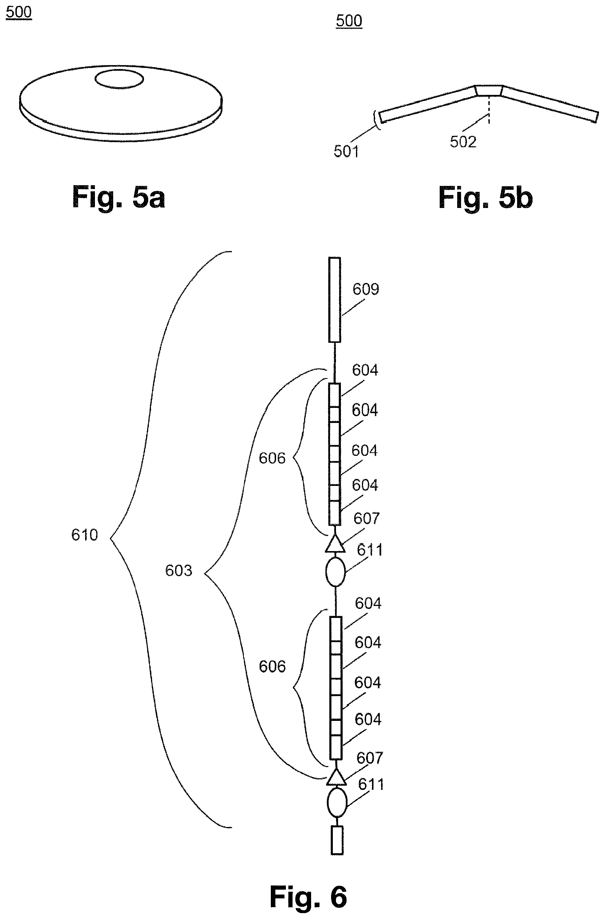

Figure 5a depicts an exemplary disk spring. A disk spring 500 for use with the cable dynamics isolator 200 may be in any suitable shape, and may be made of any suitable material. For example, the disk spring 500 may include an opening of any suitable size at a narrow end, and any suitable circumference around the based at a wider end. The disk spring 500 may be bowl-shaped, such that the disk spring 500 maintains a near-uniform thickness between the wider end and the narrower end. When two disk springs 500 are arranged in series, with the wider ends touching, contact may be made at the end of the wider end. When the disk spring 500 is compressed, either from the wider end or the narrower end, the disk spring 500 may flatten, bringing the opening of the narrower end toward the wider end and causing the disk spring 500 to become more plate shaped as the disk spring 500 compresses.

Figure 5b depicts an exemplary cross-sectional view of a disk spring. The disk spring 500 may have a thickness 501 and a height 502. The height 502 may be the distance the bottom of the narrow end of the disk spring 500 travels while being compressed before the disk spring 500 is flat. The thickness 501 may be the uniform or near-uniform thickness of the disk spring 500 from the wider end to the narrower end. The thickness 501 and the height 502 of the disk spring 500 may determine the shape of the deflection curve for the disk spring 500, which may indicate how the disk spring 500 attenuates axial motion. The greater the ratio between the height 502 and the thickness 501, the more digressive the load versus elongation curve for the disk spring 500 may be. The slope of the deflection curve for the disk spring 500 is the spring rate for the disk spring 500. A higher ratio between the height 502 and the thickness 501 of the disk spring 500 may also result in wider low-spring rate zone for the disk spring 500. Note that a linear range for the load versus elongation curve is considered in the field when the height to thickness ratio is less than 0.6. In one application, the height to thickness ratio for the multi-axis flexure 400 is in the range of 1.2 to 1.4. In another application, the height to thickness ratio for the multi-axis flexure 400 is selected such that the load versus elongation curve is non-linear, i.e., the ratio is larger than 0.6.

Figure 6 depicts an exemplary electro-mechanical cable with cable dynamics isolators. Cable dynamics isolators 611 may be deployed at any suitable location within streamer field 610. For example, the cable dynamics isolators 611 may be deployed immediately behind the birds 607 along the electro-mechanical cable 603. The birds 607 may allow for the maintenance of uniform separation between the electro-mechanical cables 603 in the streamer field 610, but may also introduce forces that act perpendicular to the electro-mechanical cable 103, inducing localized transverse motion in the electro-mechanical cable 103. The cable dynamics isolators 611 may attenuate this transverse motion, for example, through the use of the bending and rotational motion suppression section 208, including, for example, the multi-axis flexure 209. This may reduce the amount of noise induced by the actions of the birds 607 that reaches the sensor components 604 in each section 606 of the electro-mechanical cable 603. Radial vibration isolation modules 609 may be placed at the head of the electro-mechanical cable 603.

The cable dynamics isolators 611 may also attenuate noise from axial motion induced in the electro-mechanical cable 603. The electro-mechanical cable 603 may be towed by a marine vessel, such as the marine vessel 101. Tension may be introduced into the electro-mechanical cable 603 by the towing, inducing axial motion in the electro-mechanical cable 603. The cable dynamics isolators 611 may attenuate the noise from the axial motion of the electro-mechanical cable 603, for example, with the axial motion suppression section 203, which may include the disk springs 204, the rod 205, and the chamber 206. The tension in the electro-mechanical cable 603 may be a function of drag, which may result in low tension at the tail of the electro-mechanical cable 603 and high tension at the head of the electro-mechanical cable 603. The size and number of disk springs 504 used in a given cable dynamics isolator 611 may be calculated so that the disk springs may collapse as needed to ensure a low spring rate for the tension present in the electro-mechanical cable 603 at the specific location of the isolator 611. Thus, regardless of the location at which the cable dynamics isolators 611 are deployed within the electro-mechanical cable 603, they can exhibit low spring rate for the tension at that location, and high spring rates for smaller or higher tensions as will be discussed later. This may reduce the axial noise that reaches the sensor components 604 in each of the sections 606 of the electro-mechanical cable 603.

Figures 7a and 7b depict exemplary graphs representing the dynamics of a cable dynamics isolator. Graph 700 may represent an exemplary deflection curve of a non-linear spring, such as a disk spring with a height to thickness ratio greater than 0.6. Graph 700 defines a deflection curve 704 that is non-linear and digressive, i.e., it provides digressive stiffness. Note that traditional noise suppressing devices have a curve 706 that provides progressive stiffness. Such a characteristic increases in a non-linear manner as illustrated in Figure 7a. Note that curve 706 has no linear portion while digressive curve 704 exhibits a substantially linear portion 704a having a low spring rate. The disk springs 204 may be stiff above and below tension values inside of a range 701, and soft when experiencing tension values within the range 701, i.e., for portion 704a. For example, the range 701 may between 16,000 and 20,000 Newtons (or 25,000 and 29,000 N), indicating that the disk springs 204 may be stiff when subject to less than 16,000, or more than 20,000 N, and may be soft when subject to between 16,000 and 20,000 N. Other values for this range may be used depending on the characteristics of the streamer spread, vessel's speed, etc. The range 701 may be the operational region for the disk springs 204, and may indicate the size of a low spring rate zone 702 for the disk springs 204. Thus, when cable dynamics isolator 611 is placed in the electro-mechanical cable at a location that corresponds to the force range 701, it exhibits a low spring rate, which attenuates axial noise propagation. Note that the desired operational range for disk springs 204 is substantially linear in the low spring rate zone 702.

Graph 710 represents an exemplary piecewise continuous deflection curve for a series of disk springs, such as the disk springs 204. For example, the cable dynamics isolator 200 may use multiple sets of disk springs 204 in any suitable parallel and series combinations, where each set of disk springs 204 may be arranged in series. The disk springs 204 may differ, for example, having different thicknesses and heights. For example, two disk springs 204 in a first pair may have the same thickness and height as each other, while having a different thickness and height from two disk springs 204 in a second pair. The piecewise deflection curve may result when disk springs 204 are selected and arranged to optimize for tension bands. For example, the graph 710 shows a piecewise deflection curve for disk springs 204 optimized for a tension band 711. Three sets of disk springs 204 may be used, with each having a low spring rate zone covering a different part of the tension band 711. The low spring rate zone 712 may belong to a first set of disk springs 204, the low spring rate zone 713 may belong to a second set of disk springs 204, and the low spring rate zone 714 may belong to a third set of disk springs 204. By using all three sets of disk springs 204, the cable dynamics isolator 200 may have a low spring rate across the entire tension band 711, allowing the cable dynamics isolator 200 to attenuate axial noise from any tension level in the entire tension band 711.

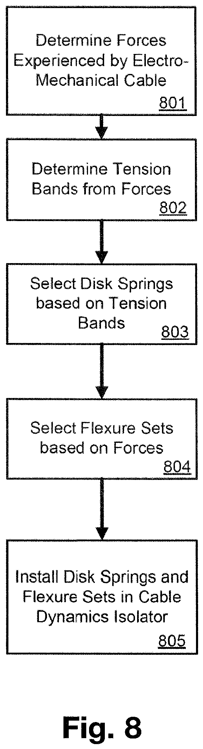

Figure 8 depicts an exemplary procedure for preparing a cable dynamics isolator. In block 801, forces experienced by an electro-mechanical cable may be determined at various locations. For example, the electro-mechanical cable 103 may be tested at sea, while being towed behind the marine vessel 101. Vector sensors, such as accelerometers, may be used in the electro-mechanical cable 103 to determine the properties of axial, rotational, transverse, and bending forces experienced at various points along the electro-mechanical cable 103. The forces may also be determined in an any other suitable manner, including simulations, estimations, or application of engineering and physics principles to the known properties of the electro-mechanical cable 103, marine vessel 101, towing assembly 102, and the water.

In block 802, tensions bands may be determined from the forces. For example, a tension band such as the tension band 711 may be determined for the electro-mechanical cable 103. The properties of the axial forces determined for the electro-mechanical cable may be used to determine any tension band, such as the tension band 711, for which a low spring rate may be needed in the cable dynamics isolator 200 in order to attenuate axial vibration. For example, it may be determined that attenuating axial vibration in the electro-mechanical cable may require a low spring rate in the axial motion suppression section 203 in a tension band from 5000 to 10000 Newtons.

In block 803, disk springs may be selected based on tension bands. For example, the disk springs 204 may be selected and arranged based on the tension bands that require a low spring rate in order to attenuate axial vibration of the electro-mechanical cable 103. Any number of the disk springs 204 may be selected based on height and thickness, and may be arranged in any suitable manner so that, for example, a piecewise continuous deflection curve for the disk springs 204 may include low spring rate zone covering the desired tension bands.

In block 804, flexure sets may be selected based on the forces. For example, the bending, transverse, and rotational forces may be used to select flexure sets, such as the flexure sets 401 and 402, for inclusion in the cable dynamics isolator 200. The selected flexure sets may be used in a multi-axis flexure, such as the multi-axis flexure 209.

In block 805, the selected disk springs and flexure sets may be installed in a cable dynamics isolator. For example, the disk springs 204, along with the rod 205 and chamber 206, and multi-axis flexure 209, may be installed in the cable dynamics isolator 200, in the axial motion suppression section 203 and the bending and rotational motional suppression section 208.

The cable dynamics isolator 200 may include only the axial motion suppression section 203, or only the bending and rotational motion suppression section 208, depending on the intended use of the cable dynamics isolator 200. For example, if there are no tension bands for which a low spring rate is needed, the cable dynamics isolator may not need any of the disk springs 204, so none may be selected, and only the bending and rotational motional suppression section 208 may be included, including, for example, the multi-axis flexure 209. The cable dynamics isolator 200 may be attached to the electro-mechanical cable 103 at any suitable point along the electro-mechanical cable 103, including within one of the sections 106. If the cable dynamics isolator 200 is installed within one of the sections 106, the cable dynamics isolator 200 may omit the male and female couplings 201 and 202.

Thus, according to an embodiment, a cable dynamics isolator may be adjusted to have more or less disk springs and more or less multi-axis flexures depending on the type of streamer, the forces exerted on the streamer, and the location of the cable dynamics isolator along the streamer. In other words, a cable dynamics isolator may be dynamically configured for a future job in a streamer. This provides great flexibility in fitting any existing streamer with the appropriate noise suppression device, at any desired location along the streamer.

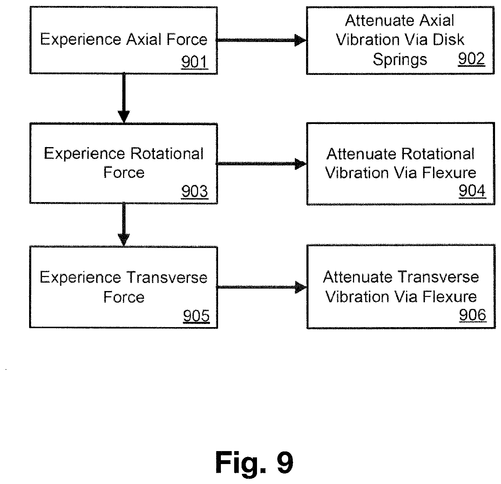

Figure 9 depicts an exemplary procedure for a cable dynamics isolator. In block 901, a cable dynamics isolator may experience axial force. For example, the cable dynamic isolators 611 on the electro-mechanical cable 603 may experience axial force due to towing of the electro-mechanical cable 603. As the electro-mechanical cable 603 is towed forward, the part of the electro-mechanical cable 603 in front of the cable dynamics isolators 611 may pull on the male coupling 201, pulling it away from the female coupling 202, as the portion of the electro-mechanical cable behind the cable dynamics isolators 611 may cause drag. The axial force may be experienced by the electro-mechanical cable 603.

In block 902, axial vibrations may be attenuated via disk springs. For example, axial vibrations may be induced by the tension in the electro-mechanical cable 603 due to towing. As the male coupling 201 is pulled away from the female coupling 202, the plunger 207 may compress the disk springs 204 in the cable dynamics isolators 611. The disk springs 204 may thus attenuate the axial vibrations induced by the axial force. When vibrations that propagate along the electro-mechanical cable are attenuated, the disk springs 204 may uncompress in a manner that reduces any axial vibrations induced by the vibrations on the electro-mechanical cable 103. This may reduce the noise experienced by the sensor components 604.

In block 903, a cable dynamics isolator may experience rotational force. For example, the cable dynamic isolators 611 on the electro-mechanical cable 603 may experience rotational force due to towing of the electro-mechanical cable 603 through the water, due to the motion of the water, or due to the actions of the birds 607. The rotational force may be experienced down the length of the electro-mechanical cable 603 from the origin of the force, for example, one of the birds 607.

In block 904, rotational vibrations may be attenuated via flexures. For example, the multi-axis flexure 209 in the cable dynamics isolators 611 may absorb rotation, attenuating vibrations caused by any rotational forces experienced by the electro-mechanical cable 603. This may reduce the noise experienced by the sensor components 604.

In block 905, a cable dynamics isolator may experience transverse force. For example, the cable dynamic isolators 611 on the electro-mechanical cable 603 may experience transverse forces due to towing of the electro-mechanical cable 603 through the water, due to the motion of the water, or due to the actions of the birds 607. The transverse force may be experienced down the length of the electro-mechanical cable 603 from the origin of the force, for example, one of the birds 607.

In block 906, transverse vibrations may be attenuated via flexures. For example, the multi-axis flexure 209 in the cable dynamics isolators 611 may absorb bending motion, attenuating vibrations caused by any transverse forces experienced by the electro-mechanical cable 603. This may reduce the noise experienced by the sensor components 604.

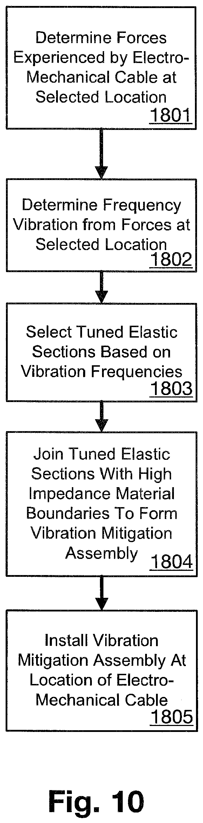

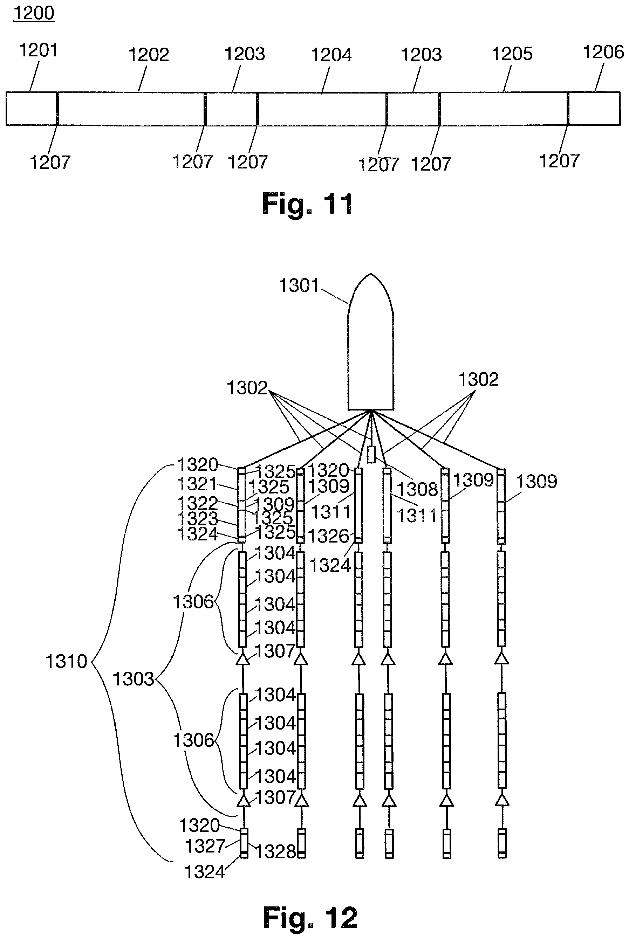

Figure 10 depicts an exemplary procedure for preparing a vibration mitigation assembly, also called apparatus for vibration mitigation, (described in more details later on the description according to figures 11 to 13) with sequential impedance optimization. In block 1801, forces experienced by an electro-mechanical cable may be determined at selected locations. For example, the electro-mechanical cable 103 may be tested at sea, while being towed behind the marine vessel 101. Vector sensors, such as accelerometers, may be used in the electro-mechanical cable 103 to determine the properties of axial, rotational, transverse, and bending forces experienced at selected locations along the electro-mechanical cable 103, in a selected part of the streamer field 110. The forces may also be determined in an any other suitable manner, including simulations, estimations, or application of engineering and physics principles to the known properties of the electro-mechanical cable 103, marine vessel 101, towing assembly 102, and the water.

In block 1802, vibration frequencies may be determined (measured or calculated) from the forces determined in block 1801. For example, the frequencies of the vibrations experienced by the electro-mechanical cable 103 at the selected locations may be determined based on the forces experienced the electro-mechanical cable 103 at the selected locations. The vibrations may be the noise experienced by the electro-mechanical cable 103 during use which may interfere with the signal being picked up by the sensor components 104 during a seismic survey. The vibration mitigation assemblies intended for installation at the selected locations may need to suppress or attenuate the vibrations at the determined frequencies experienced by the electro-mechanical cable 103.

In block 1803, tuned elastic sections may be selected based on the determined vibration frequencies in block 1802. For example, the tuned elastic sections

(explained in details in relation with the figures 2 to 5b), such as the tuned elastic sections 1202, 1204, and 1205 of figure 11, may be selected and arranged based on the frequency of vibrations to be suppressed by the vibration mitigation assembly, for example, the vibration mitigation assembly 1200, in order to attenuate vibrations experienced by the electro-mechanical cable 103. Any number of the tuned elastic sections may be selected for a given vibration mitigation assembly, and they may have varying lengths and constructions, including use of differing combinations of springs, dampers, and visco-elastic material. Note that the tuned elastic elements discussed above with regard to Figures 2 to 5b and 13 are only exemplary and other tuned elastic elements may be used. In one application, traditional vibration attenuation modules, which are not tunable, may be mixed up with one or more tuned elastic elements to produce a vibration mitigation assembly. The tuned elastic sections may be selected to create a cascade filter for the determined vibration frequencies.

In block 1804, the tuned elastic sections and/or non-tuned elements (e.g., traditional vibration attenuation modules) may be joined with high impedance material boundaries to form a vibration mitigation assembly. For example, the tuned elastic sections 1202, 1204, and 1205 of figure 11, may be joined together using inter-module connectors 1203 between each of the tuned elastic sections 1202, 1204, and 1205 to form the vibration mitigation assembly 1200. The coupling between each of the tuned elastic sections 1202, 1204, and 1205, and the inter-module connectors 1203 may be a high impedance material interface 1207. A head end coupler 1201 and a tail end coupler 1206 may also be joined to the vibration mitigation assembly 1200, for example, at the front and back of the vibration mitigation assembly, using high impedance material interface 1207. The tuned elastic sections may be arranged in the vibration mitigation assembly according to sequential impedance optimization to create a cascade filter that may allow the vibration mitigation assembly to attenuate vibrations at the determined frequencies at the intended installation location along an electro-mechanical cable, such as the electro-mechanical cable 103, and within a streamer field, such as the streamer field 110.

Thus, according to an embodiment, a vibration mitigation assembly may be adjusted to have more tuned elastic sections joined by more or less inter-module connectors depending on the type of streamer, the forces exerted on the streamer, and the location of the vibration mitigation assembly along the streamer. In other words, a vibration mitigation assembly may be dynamically configured for a future job in a streamer. This provides great flexibility in fitting any existing streamer with the appropriate noise suppression device, at any desired location along the streamer.

At block 1805, a vibration mitigation assembly may be installed in an electro-mechanical cable. For example, the vibration mitigation assembly 1309 of the figure 12 may be installed at the head of the electro-mechanical cable 1303 farthest from the air gun 1308. The vibration mitigation assembly may be installed at the selected location in the electro-mechanical cable 103 and the streamer field 110 at which the forces were measured, as the vibration mitigation assembly may be constructed specifically to attenuate vibrations caused by the forces measured at that selected location. Note that more than one vibration mitigation assembly may be installed along a single cable. In one embodiment, a mixture of vibration mitigation assemblies is installed along a single cable. In another embodiment, the mixture of vibration mitigation assemblies is installed along the streamer field, with some or all cables having different assembly configurations. The type and position of the vibration mitigation assembly used for each cable is predetermined based on the above noted calculations, which take into account the type of seismic survey and its characteristics.

In this regard, Figure 11 depicts a vibration mitigation assembly 1200. Vibration mitigation assembly 1200 may include head end coupler 1201 and tail end coupler 1206, and any suitable number of tuned elastic sections, such as, for example, tuned elastic sections 1202, 1204, and 1205, connected using any suitable number of inter-module connectors 1203. The head end coupler 1201 and the tail end coupler 1206 may allow the vibration mitigation assembly 1200 to be coupled to any of the components of an electro-mechanical cable 103, such as the sections 106 with sensor components 104 and the birds 107. For example, the vibration mitigation assembly 1200 may be coupled to the tow assembly 102 and to one of the sections 106 along the length of one of the electro-mechanical cables 103 using the head end coupler 1201 and the tail end coupler 1206. The vibration mitigation assembly 1200 may be coupled at any suitable location along the electro-mechanical cable 103. In one application, the vibration mitigation assembly 1200 may be coupled between two different sections 106. In another application, the vibration mitigation assembly 1200 may be at the end of the electro-mechanical cable 103, and only the head end coupler 1201 may be coupled to a preceding section 106. In yet another application, vibration mitigation assembly 1200 may be integrally build inside a section 106. In other words, vibration mitigation assembly 1200 may exist as an independent module that is configured to be attached anywhere along the length of the electro-mechanical cable 103 or it may be manufactured inside any section 106 of electro-mechanical cable 103. Those skilled in the art would recognize the greater flexibility if the former approach is taken. However, the later approach is not without merits.

The tuned elastic sections 1202, 1204, and 1205 may be made of any suitable material, and in any suitable shape, and may be elastic stretch modules with a complex spring rate selected for a given frequency pass-band. The tuned elastic sections 1202, 1204, and 1205 may each have a complex spring rate due to the use of a spring, damper, visco-elastic material, or other suitable device, material, or combination thereof. Each of the tuned elastic sections in the vibration mitigation assembly, such as the tuned elastic sections 1202, 1204, and 1205 may have different complex spring rates, and may use different combinations of springs, dampers, and visco-elastic materials, or other devices and materials, and may be of different lengths. A specific example of a tuned elastic section is discussed later.

Each of the tuned elastic sections 1202, 1204, and 1205 may be optimized for a predefined frequency bandwidth, which may allow for the tuned elastic section to suppress vibrations within that frequency bandwidth. For example, if the seismic frequency range of interest is 5 to 250 Hz, such a tuned elastic section may be configured to suppress noise only in a reduced frequency range, for example, 5 to 30 Hz. Other frequency ranges may be uses as will be appreciated by those skilled in the art. This may reduce the amount of noise that reaches the sensor components 104. The frequency bandwidth of vibrations suppressed by one of the tuned elastic sections 1202, 1204, and 1205 may be selected based on the intended location of the vibration mitigation assembly 1200 along the electro-mechanical cable 103 and within the streamer field 110, and on the number of frequency bandwidths selected for other tuned elastic sections used in the same vibration mitigation assembly 1200. For example, if low frequency noise is determined to be generated at the front of the streamer field 110 and high frequency noise is detected to be generated at the rear of the streamer field 110, one or more elastic sections 1202, 1204, and 1205 tuned for low frequency may be frontally deployed while one more elastic sections 1202, 1204, and 1205 tuned for high frequency may be deployed at the end of the streamer field. The frontal and rear positions are exemplary and those skilled in the art would understand that the elastic sections 1202, 1204, and 1205 may be deployed at any location along the electro-mechanical cable, as determined by the operator of the seismic survey. The structure of one of the tuned elastic sections 1202, 1204, and 1205, including length and use of any springs, dampers, visco-elastic, or other materials or devices, may be based on the frequency bandwidth of the vibrations the tuned elastic section is intended to suppress. Note that in one application a single tuned elastic section may be used for an entire section and/or for an entire electro-mechanical cable. More tuned elastic sections may be more advantageous for suppressing a larger frequency range noise.

The tuned elastic sections 1202, 1204, and 1205 of the vibration mitigation assembly 1200 may be connected together using the inter-module connectors 1203. The boundaries between the tuned elastic sections 1202, 1204, and 1205, and the inter-module connectors 1203, the head end coupler 1201, and the tail end coupler 1206, may be high impedance material interfaces 1207. The high impedance material interfaces 1207 may use any suitable combination of physical properties, such as density and elasticity, and coupling geometry to create a high impedance mismatch which may inhibit the transmission of energy between the various couplings of the vibration mitigation assembly 1200.

The sequential use of the high impedance material interfaces 1207 and tuned elastic sections 1202, 1204, and 1205 may result in the vibration mitigation assembly 1200 acting as a cascade filter. For example, a first tuned elastic section 1202 may be configured to attenuate noise in the frequency range of 5 to 10 Hz, a second tuned elastic section 1204 may be configured to attenuate noise in the frequency range of 10 to 15 Hz and a third tuned elastic section 1205 may be configured to attenuate noise in the frequency range of 15 to 25 Hz. These ranges are exemplary and not intended to limit the invention. More ranges may be envisioned if more tuned elastic sections are used. The ranges noted above may be narrower or larger or they may overlap. Note that the tuned elastic sections may be distributed one after another at substantially a same location of the electro-mechanical cable or they may be physically separated by one or more streamer sections 106. In one application, the one or more tuned elastic sections may be connected to each other. In still another application, two or more of the tuned elastic sections are isolated by one or more high impedance material interfaces 1207 from each other.

The vibration mitigation assembly 1200 may thus be tailored to attenuate vibration based on frequency and spatial requirements through the selection of tuned elastic sections, for example, tuned elastic sections 1202, 1204, and 1205, used in the vibration mitigation assembly 1200. The vibration mitigation assembly 1200 may use sequential impedance optimization, through the impedance of the tuned elastic sections 1202, 1204, and 1205, to attenuate vibrations experienced at a specific section of the electro-mechanical cable 103, at a specific location with the streamer field 110.

Figure 12 depicts an exemplary marine-seismic cable system with vibration mitigation assemblies. A marine vessel 1301, including a lead-in towing assembly 1302, may deploy and tow electro-mechanical cables 1303, on or below the surface of the water. Sections 1306 of the electro-mechanical cables 1303 may include various sensor components 1304. Birds 1307 may be capable of moving the electro-mechanical cables 1303. Any number of vibration mitigation assemblies, such as the vibration mitigation assembly 1200, may be installed on the electro-mechanical cables 1303 of the streamer field 1310. For example, vibration mitigation assemblies 1309 and 1311 may be installed at the head of each electro-mechanical cable 1303 in the streamer field 1310 in place of the radial vibration isolation modules 109. Additional vibration mitigation assemblies 1327 may be installed at the tail of each electro-mechanical cable 1303, and further vibration mitigation assemblies may be installed at any suitable location along the electro-mechanical cables 1303. In one embodiment, one or more vibration mitigation assembly is installed after each bird. The vibration mitigation assemblies discussed herein may include any number of tuned elastic assemblies. Thus, a single vibration mitigation assembly may be designed to attenuate noise in a narrow frequency range or large frequency range. Therefore, a vibration mitigation assembly may be tuned to attenuate a desired frequency range, as desired by the seismic survey's operator. According to an embodiment, such an assembly is advantageous because it may be tuned depending upon its location along the electro-mechanical cable, the type of sensors carried by the cable, the type of birds used to steer the cable, etc. Thus, the assembly solution disclosed in this embodiment is highly adaptive and flexible depending on the seismic survey.

The vibration mitigation assemblies 1309, 1311, and 1327 may all differ from each other, as each of the vibration mitigation assemblies may be assembled to attenuate the vibrations experienced at its location of installation. For example, the vibration mitigation assembly 1309 may be assembled using head end coupler 1320, tail end coupler 1324, tuned elastic sections 1321 and 1323, and inter-module connector 1322, joined with high impedance material interfaces 1325. The tuned elastic sections 1321 and 1323 may differ, for example, having different lengths or being constructed using different springs, dampers, or visco-elastic materials. The vibration mitigation assembly 1311 may be assembled using a head end coupler 1320, tailed end coupler 1324, and a tuned elastic section 1326. The tuned elastic section 1326 may differ from the tuned elastic sections 1321 and 1323, as the tuned elastic section 1326 may be constructed to suppress vibrations at frequencies experienced by the electro-mechanical cable 1303 closest to the air gun 1308. The frequency of those vibrations may be different than the frequency of vibrations experienced by the electro-mechanical cable 1303 farther from the air gun 1308, resulting in the structure of the vibration mitigation assembly 1309 differing from the structure of the vibration mitigation assembly 1311. The vibration mitigation assembly 1327 may use a tuned elastic section 1328, which may differ from, for example, be shorter than, the vibration mitigation assemblies 1309 and 1311.

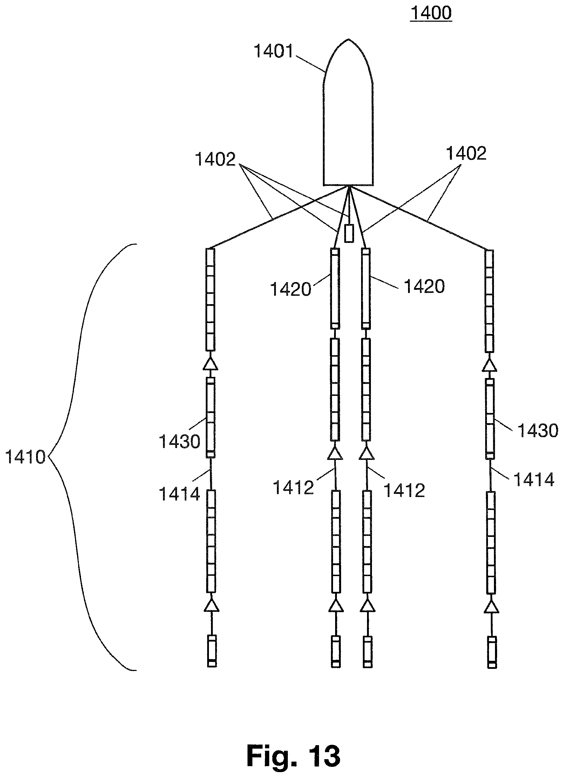

In addition, the vibration mitigation assemblies may be disposed along each electro-mechanical cables in different configurations. More specifically and as illustrated in Figure 13, a seismic survey system 1400 includes a vessel 1401 towing a streamer spread 1410 that includes central electro-mechanical cables 1412 and peripheral electro-mechanical cables 1414. One or more central electro-mechanical cables may be fitted with one type of vibration mitigation assemblies 1420 while the peripheral electro-mechanical cables 1414 may be fitted with another type of vibration mitigation assemblies 1430. The term "type of vibration mitigation assembly" may refer to various seismic parameters, for example, the frequency range attenuation. In another embodiment, the first type of vibration mitigation assemblies 1420 are distributed at a front part of the seismic spread 1410 while the second type of vibration mitigation assembly is distributed after each bird. In still another application, the first type of vibration mitigation assemblies are distributed at the front part of the seismic spread, only on the central cables 1412 while the second type of vibration mitigation assembly is distributed after each bird only on the peripheral cables 1414. Other combination of the first and second type of vibration mitigation assemblies, other positions of them and other types of assemblies may be conceived on all or part of the cable of the streamer spread 1410.

Vibration mitigation assemblies, such as the vibration mitigation assemblies 1309, 1311, and 1327, may be constructed using any suitable combination of tuned elastic sections, such as the tuned elastic sections 1321, 1323, and 1326, joined by inter-module connectors and high-impedance material interfaces. Each vibration mitigation assembly used with electro-mechanical cables in a streamer field, such as the electro-mechanical cables 1303 in the streamer field 1310, may be constructed based on the frequency of vibrations that the vibration mitigation assembly is intended to suppress. The frequency of the vibrations may be dependent on the intended installation location for the vibration mitigation assembly along the electro-mechanical cable and within the streamer field.

Various embodiments provide an apparatus and method for cable (streamer) vibration mitigation through sequential impedance optimization and via non-linear multi-axis flexures. The apparatus is also called vibration mitigation assembly. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

According to various embodiments, the term "tuned" means that the corresponding hardware is designed to attenuate a noise band, also called swath, of energy of interest. In particular embodiments, said swath or band of energy of interest may be 4-50Hz wide. The Navy has three frequency categories of vibrational noise (acoustic and structural) : Narrowband [≤3 Hz wide] ; Swath [4-50Hz wide] and ; Broadband [≥50 Hz wide]. A swath "of interest" is noise that is wanted to be kept away from the sensor(s).

According to various embodiments, the term "tuned" may refer to being able to adjust targeted band or swath to attenuate in the field. For instance, if the hardware provides attenuation from 10-15 Hz (5Hz bandwidth), but that sensors indicate the noise is around 18Hz, a physical adjustment may be made to the hardware to shift that attenuation band to encompass 18 Hz, for instance 15-20 Hz. Also if the targeted band or swath is wider than 5Hz, several pieces of hardware, also called sections, may be put together. Thus, two sections could attenuate over a 10Hz wide band in this example, and three could attenuate over a 15 Hz wide, and so on.

According to various embodiments, the term "tuned" may also have a location meaning. "Tuned" may thus refer to placing hardware, which may or may not be adjusted as in the above paragraph, at different locations along the streamer.

According to various embodiments, a material interface that is said to be of "high impedance" is a material interface that enables the energy related to vibration to be dissipated. Indeed, how a material responds to vibration can be quantified in terms of impedance. If energy flows through a boundary with little loss (by conversion to heat or by reflection), that boundary is said to be of low impedance. Conversely, high impedance means the energy related to vibration is dissipated. The use of high impedance materials means that the apparatus contains structural interfaces that either absorb or reflect energy, thus isolating the unwanted vibration source (noise) from the sensor(s). Mechanical impedance (Z) can defined as either by Z=ρ^{∗}v with ρ=density and v=velocity, or by the ratio of the sinusoidal force (F) applied to the system at that point to the velocity (v) at the same point Z=F/v.

In various embodiments, the terms "complex spring rate" may refer to the fact that the spring rate may be at times linear and at other times non-linear, by opposition to the common designs assumptions used in most mechanical designs according to which a spring rate is a linear spring rate, or a variable spring rate that can be discretized into linear sections for analysis, and/or according to which the spring rate is a property of a homogeneous material, such as a solid block of rubber. Thus in various embodiments, components that, when taken together, form a spring rate may be tailored (tuned or optimized) so that the spring rate may be at times linear and at other times non-linear.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims.

## Claims

1. An apparatus for vibration mitigation (1309) comprising:
one or more tuned elastic sections (1321) adapted to attenuate vibrations; and
a head end coupler (1320) adapted to couple the apparatus for vibration mitigation to a component of an electro-mechanical cable (1303) or a tow assembly (1302), wherein one of the one or more tuned elastic sections (1321) is coupled to the head end coupler (1320) with a high impedance material interface (1325), said at least one high impedance material interface (1325) being adapted to create an impedance mismatch between the one or more tuned elastic sections and the head end coupler to inhibit transmission of energy;
said apparatus for vibration mitigation being dynamically configured prior to be placed at a first selected location of an electro-mechanical cable (1303) within a streamer spread, by selecting said one or more tuned elastic sections (1321) to attenuate vibrations in a specified frequency range, based on pre-determined forces experienced at said first selected location on the electro-mechanical cable within a streamer spread,
said one or more tuned elastic sections (1321) comprising:
at least one section for suppression of motion, wherein the at least one section for suppression of motion includes an axial motion suppression section (203), the axial motion suppression section (203) comprising one or more springs (204) for the attenuation of axial vibrations in an electro-mechanical cable;
**characterized in that** the at least one section for suppression of motion further comprises a bending and rotational motion suppression section (208) for the attenuation of transverse and rotational vibrations in the electro-mechanical cable,
wherein the bending and rotational motion suppression section (208) comprises at least one flexure.

2. The apparatus according to claim 1, further comprising:
one other tuned elastic section (1323); and
an inter-module connector (1322), wherein the one other tuned elastic sections (1323) is coupled to a first end of the inter-module connector (1322) with a high impedance material interface (1325), and wherein the one of the one or more tuned elastic sections (1321) is coupled to a second end of the inter-module connector with a high impedance material interface (1325);
wherein the high impedance material interface (1325) is adapted to create a high impedance mismatch that prohibits the transmission of energy using one or more of physical properties comprising density and elasticity and variations in coupling geometry.

3. The apparatus according to claim 2, wherein one of the one or more tuned elastic sections (1321) has a different length than the one other tuned elastic section (1323).

4. The apparatus according to any one of the claims 2 to 3, wherein the one other tuned elastic section (1323) is adapted to attenuate vibrations in a specified frequency range that is different from the specified frequency range for one of the one or more tuned elastic sections (1321).

5. The apparatus according to any one of the claims 1 to 4, wherein
said one or more springs (204) are part of equipment for the attenuation of axial vibrations in an electro-mechanical cable,
wherein the equipment is configured to produce a degressive stiffness curve.

6. The apparatus of claim 5, wherein equipment for the attenuation of axial vibrations comprises:
a rod (205); and
a chamber (206),
wherein the one or more springs (204) are arranged on the rod (205) within the chamber (206) such that a motion of a plunger (207) towards the base of the chamber (206) compresses the springs (204) between the plunger (207) and the base of the chamber (206).

7. The apparatus of claim 6, further comprising
a male coupling (201) ; and
a female coupling (202), wherein the chamber (206) is disposed in between the male coupling (201) and the female coupling (202), the rod (205) is mechanically linked to one of the male coupling (201) and the female coupling (202), the opening of the chamber (206) is mechanically linked to the other of the male coupling (201) and the female coupling (202), and motion of the male coupling (201) away from the female coupling (202) causes compression of the one or more springs (204).

8. The apparatus of claim 7, wherein the flexure is a beam-type multi-axis flexure (209) comprising two or more flexure sets, wherein said at least one flexure is an elastomeric multi-axis flexure, wherein two of the two or more flexure sets are connected to each other at an angle of at least 90 degrees.

9. A method for preparing an apparatus for vibration mitigation (1309) according to claim 1 comprising the successive following steps:
determining (1801) axial, rotational, transverse and bending forces experienced at a first selected location of an electro-mechanical cable (1303) within a streamer spread;
determining (1802) frequencies for vibrations caused by the forces at the first selected location of the electro-mechanical cable (1303);
selecting (1803)) one or more springs based on the determined frequencies and on the axial forces and at least one flexure based on the rotational, transverse and bending forces so that to attenuate at least a portion of the vibrations caused by the forces at the first selected location of the electro-mechanical cable to reduce the noise experienced by a sensor component (1304) of the electro-mechanical cable,
installing (805) any of the selected one or more springs in the axial motion suppression section (203) and the selected at least one flexure in the bending and rotational motion suppression section (208) to form the one or more tuned elastic sections (1321);
joining (1804) the one or more tuned elastic sections (1321) to a head end coupler (1320) using at least one high impedance material interface (1325) to form the apparatus for vibration mitigation (1309), whereby the head end coupler (1320) is adapted to couple the apparatus for vibration mitigation to a component of an electro-mechanical cable (1303) or a tow assembly (1302) and said at least one high impedance material interface (1325) creates an impedance mismatch between the one or more tuned elastic sections and the head end coupler to inhibit transmission of energy; and
placing (1805) the apparatus for vibration mitigation (1309) at the first selected location along the electro-mechanical cable within a streamer spread.

10. The method of claim 9, wherein the steps of the method of claim 9 are executed for a second selected location of the electro-mechanical cable for preparing and installing a second apparatus for vibration mitigation at the second selected location on the electro-mechanical cable.

11. The method according to any one of the claims 9 to 10, further comprising
determining (802) a tension band for vibrations in the electro-mechanical cable caused by the forces experienced by electro-mechanical cable;
wherein the at least one or more springs are selected to produce a degressive stiffness curve based on the determined tension band.

## Patentansprüche

1. Vorrichtung zur Schwingungsminderung (1309) umfassend:
einen oder mehrere abgestimmte elastische Abschnitte (1321), die zum Dämpfen von Schwingungen ausgelegt sind; und
einen Kopfstückkoppler (1320), der zum Koppeln der Vorrichtung zur Schwingungsminderung mit einer Komponente eines elektromechanischen Kabels (1303) oder einer Seilanordnung (1302) ausgelegt ist, wobei einer des einen oder der mehreren abgestimmten elastischen Abschnitte (1321) mit dem Kopfstückkoppler (1320) mit einer Berührungsfläche aus einem Material mit hoher Impedanz (1325) gekoppelt ist, wobei die mindestens eine Berührungsfläche aus einem Material mit hoher Impedanz (1325) so ausgelegt ist, dass sie eine Impedanzfehlanpassung zwischen dem einen oder den mehreren abgestimmten elastischen Abschnitten und dem Kopfstückkoppler erzeugt, um Übertragung von Energie zu hemmen;
wobei die Vorrichtung zur Schwingungsdämpfung vor ihrer Anordnung an einer ersten ausgewählten Stelle eines elektromechanischen Kabels (1303) innerhalb einer Streamer-Verteilung durch Auswählen des einen oder der mehreren abgestimmten elastischen Abschnitte (1321) zum Abschwächen von Schwingungen in einem spezifizierten Frequenzbereich basierend auf vorbestimmten Kräften, die an der ersten ausgewählten Stelle auf dem elektromechanischen Kabel innerhalb einer Streamer-Verteilung wahrgenommen werden, dynamisch konfiguriert wird,
wobei der eine oder die mehreren elastischen Abschnitte (1321) umfassen:
mindestens einen Abschnitt zur Unterdrückung von Bewegung, wobei der mindestens eine Abschnitt zur Unterdrückung von Bewegung einen Axialbewegungsunterdrückungsabschnitt (203) umfasst, wobei der Axialbewegungsunterdrückungsabschnitt (203) eine oder mehrere Federn (204) zur Dämpfung von Axialschwingungen in einem elektromechanischen Kabel umfasst;
**dadurch gekennzeichnet, dass** der mindestens eine Abschnitt zur Unterdrückung von Bewegung einen Biege- und Drehbewegungsunterdrückungsabschnitt (208) zur Dämpfung von Quer- und Drehschwingungen im elektromechanischen Kabel umfasst,
wobei der Biege- und Drehbewegungsunterdrückungsabschnitt (208) mindestens ein Biegeelement umfasst.

2. Vorrichtung nach Anspruch 1, ferner umfassend:
einen anderen abgestimmten elastischen Abschnitt (1323); und
einen Zwischenmodulverbinder (1322), wobei der eine andere abgestimmte elastische Abschnitt (1323) mit einem ersten Ende des Zwischenmodulverbinders (1322) mit einer Berührungsfläche aus Material mit hoher Impedanz (1325) gekoppelt ist, and wobei der eine des einen oder der mehreren abgestimmten elastischen Abschnitte (1321) mit einem zweiten Ende des Zwischenmodulverbinders mit einer Berührungsfläche aus Material mit hoher Impedanz (1325) gekoppelt ist;
wobei die Berührungsfläche aus Material mit hoher Impedanz (1325) so ausgelegt ist, dass sie unter Verwendung einer oder mehrerer physikalischer Eigenschaften, welche Dichte und Elastizität umfassen, und Änderungen der Kopplungsgeometrie eine hohe Impedanzfehlanpassung erzeugt, welche die Übertragung von Energie verhindert.

3. Vorrichtung nach Anspruch 2, wobei einer des einen oder der mehreren abgestimmten elastischen Abschnitte (1321) eine andere Länge als der eine andere abgestimmte elastische Abschnitt (1323) aufweist.

4. Vorrichtung nach einem der Ansprüche 2 bis 3, wobei der eine andere abgestimmte elastische Abschnitt (1323) so ausgelegt ist, dass er Schwingungen in einem spezifizierten Frequenzbereich dämpft, der vom spezifizierten Frequenzbereich für einen des einen oder der mehreren abgestimmten elastischen Abschnitte (1321) verschieden ist.

5. Vorrichtung nach einem der Ansprüche 1 bis 4, wobei
die eine oder die mehreren Federn (204) Teil einer Einrichtung zur Dämpfung von Axialschwingungen in einem elektromechanischen Kabel sind,
wobei die Einrichtung zum Erzeugen einer degressiven Steifigkeitskurve konfiguriert ist.

6. Vorrichtung nach Anspruch 5, wobei die Einrichtung zur Dämpfung von Axialschwingungen umfasst;
eine Stange (205); and
eine Kammer (206),
wobei die eine oder die mehreren Federn (204) auf der Stange (205) innerhalb der Kammer (206) angeordnet sind, derart dass eine Bewegung eines Kolbens (207) in Richtung der Basis der Kammer (206) die Federn (204) zwischen dem Kolben (207) und der Basis der Kammer (206) zusammendrückt.

7. Vorrichtung nach Anspruch 6, ferner umfassend:
eine Steckkupplung (201); und
eine Aufnahmekupplung (202), wobei die Kammer (206) zwischen der Steckkupplung (201) und der Aufnahmekupplung (202) angeordnet ist, die Stange (205) mit einer der Steckkupplung (201) und der Aufnahmekupplung (202) mechanisch verbunden ist, die Öffnung der Kammer (206) mit der anderen der Steckkupplung (201) und der Aufnahmekupplung (202) mechanisch verbunden ist, und Bewegung der Steckkupplung (201) von der Aufnahmekupplung (202) weg ein Zusammendrücken der einen oder der mehreren Federn (204) bewirkt.

8. Vorrichtung nach Anspruch 7, wobei das Biegeelement ein Mehrachsbiegeelement (209) vom Balkentyp ist, das zwei oder mehrere Biegeelementsätze umfasst, wobei das mindestens eine Biegeelement ein elastomeres Mehrachsbiegeelement ist, wobei zwei der zwei oder mehr Biegeelementsätze in einem Winkel von mindestens 90 Grad miteinander verbunden sind.

9. Verfahren zur Herstellung einer Vorrichtung zur Schwingungsminderung (1309) nach Anspruch 1, umfassend die folgenden aufeinanderfolgenden Schritte:
Bestimmen (1801) von Axial-, Dreh-, Quer- und Biegekräften, die an einer ersten ausgewählten Stelle eines elektromechanischen Kabels (1303) innerhalb einer Streamer-Verteilung wahrgenommen werden;
Bestimmen (1802) von Frequenzen für Schwingungen, die durch die Kräfte an der ausgewählten Stelle des elektromechanischen Kabels (1303) verursacht werden;
Auswählen (1803) einer oder mehrerer Federn basierend auf den bestimmten Frequenzen und auf den Axialkräften und mindestens eines Biegeelements basierend auf den Dreh-, Quer- und Biegekräften, so dass wenigstens ein Teil der Schwingungen, die durch die Kräfte an der ersten ausgewählten Stelle des elektromechanischen Kabels verursacht werden, gedämpft wird, um das Rauschen zu reduzieren, das von einer Sensorkomponente (1304) des elektromechanischen Kabels wahrgenommen wird,
Installieren (805) einer beliebigen der einen oder der mehreren ausgewählten Federn im Axialbewegungsunterdrückungsabschnitt (203) und des mindestens einen ausgewählten Biegeelements im Biege- und Drehbewegungsunterdrückungsabschnitt (208), um eine oder mehrere abgestimmte elastische Abschnitte (1321) zu bilden;
Verbinden (1804) des einen oder der mehreren abgestimmten elastischen Abschnitte (1321) mit einem Kopfstückkoppler (1320) unter Verwendung mindestens einer Berührungsfläche aus Material mit hoher Impedanz (1325), um die Vorrichtung zur Schwindungsminderung (1309) zu bilden, wobei der Kopfstückkoppler (1320) zum Koppeln der Vorrichtung zur Schwingungsminderung mit einer Komponente eines elektromechanischen Kabels (1303) oder einer Seilanordnung (1302) ausgelegt ist, und die mindestens eine Berührungsfläche aus Material mit hoher Impedanz (1325) eine Impedanzfehlanpassung zwischen dem einen oder den mehreren abgestimmten elastischen Abschnitten und dem Kopfstückkoppler erzeugt, um Übertragung von Energie zu hemmen; und
Anordnen (1805) der Vorrichtung zur Schwindungsminderung (1309) an der ersten ausgewählten Stelle entlang des elektromechanischen Kabels innerhalb einer Streamer-Verteilung.

10. Verfahren nach Anspruch 9, wobei die Schritte des Verfahrens nach Anspruch 9 für eine zweite ausgewählte Stelle des elektromechanischen Kabels zum Herstellen und Installieren einer zweiten Vorrichtung zur Schwingungsminderung an der zweiten ausgewählten Stelle auf dem elektromechanischen Kabel ausgeführt wird.

11. Verfahren nach einem der Ansprüche 9 bis 10, ferner umfassend:
Bestimmen (802) eines Spannbandes für Schwingungen im elektromechanischen Kabel, die durch Kräfte verursacht werden, die vom elektromechanischen Kabel wahrgenommen werden;
wobei die mindestens eine oder die mehreren Federn basierend auf dem bestimmten Spannband ausgewählt werden, um eine degressive Steifigkeitskurve zu erzeugen.

## Revendications

1. Appareil de réduction de vibrations (1309) comprenant :
une ou plusieurs sections élastiques accordées (1321) adaptées pour atténuer les vibrations ; et
un coupleur d'extrémité de tête (1320) adapté pour coupler l'appareil de réduction de vibrations à un composant d'un câble électromécanique (1303) ou d'un ensemble de remorquage (1302), dans lequel l'une des une ou plusieurs sections élastiques accordées (1321) est couplée au coupleur d'extrémité de tête (1320) avec une interface de matériau de haute impédance (1325), ladite au moins une interface de matériau de haute impédance (1325) étant adaptée pour créer une désadaptation d'impédance entre les une ou plusieurs sections élastiques accordées et le coupleur d'extrémité de tête pour inhiber la transmission d'énergie ;
ledit appareil de réduction de vibrations étant configuré dynamiquement avant d'être placé au niveau d'un premier emplacement sélectionné d'un câble électromécanique (1303) au sein d'une étendue de dévideur, en sélectionnant lesdites une ou plusieurs sections élastiques accordées (1321) pour atténuer les vibrations dans une gamme de fréquences spécifiée, sur la base de forces prédéterminées subies au niveau dudit premier emplacement sélectionné sur le câble électromécanique au sein d'une étendue de dévideur,
lesdites une ou plusieurs sections élastiques accordées (1321) comprenant :
au moins une section de suppression de mouvement, dans lequel l'au moins une section de suppression de mouvement inclut une section de suppression de mouvement axial (203), la section de suppression de mouvement axial (203) comprenant un ou plusieurs ressorts (204) pour l'atténuation de vibrations axiales dans un câble électromécanique ;
**caractérisé en ce que** l'au moins une section de suppression de mouvement comprend en outre une section de suppression de mouvement de pliage et de rotation (208) pour l'atténuation de vibrations transversales et rotationnelles dans le câble électromécanique,
dans lequel la section de suppression de mouvement de pliage et de rotation (208) comprend au moins une flexion.

2. Appareil selon la revendication 1, comprenant en outre :
une autre section élastique accordée (1323) ; et
un connecteur intermodulaire (1322), dans lequel l'autre section élastique accordée (1323) est couplée à une première extrémité du connecteur intermodulaire (1322) avec une interface de matériau de haute impédance (1325), et dans lequel l'une des une ou plusieurs sections élastiques accordées (1321) est couplée à une seconde extrémité du connecteur intermodulaire avec une interface de matériau de haute impédance (1325) ;
dans lequel l'interface de matériau de haute impédance (1325) est adaptée pour créer une forte désadaptation d'impédance qui interdit la transmission d'énergie en utilisant une ou plusieurs parmi des propriétés physiques comprenant densité et élasticité et variations de géométrie de couplage.

3. Appareil selon la revendication 2, dans lequel l'une des une ou plusieurs sections élastiques accordées (1321) a une longueur différente de l'autre section élastique accordée (1323).

4. Appareil selon l'une quelconque des revendications 2 à 3, dans lequel l'autre section élastique accordée (1323) est adaptée pour atténuer les vibrations dans une plage de fréquences spécifiée qui est différente de la plage de fréquences spécifiée d'une des une ou plusieurs sections élastiques accordées (1321).

5. Appareil selon l'une quelconque des revendications 1 à 4, dans lequel
lesdits un ou plusieurs ressorts (204) font partie d'un équipement pour l'atténuation de vibrations axiales dans un câble électromécanique,
dans lequel l'équipement est conçu pour produire une courbe de rigidité dégressive.

6. Appareil selon la revendication 5, dans lequel l'équipement pour l'atténuation de vibrations axiales comprend :
une tige (205) ; et
une chambre (206),
dans lequel les un ou plusieurs ressorts (204) sont agencés sur la tige (205) à l'intérieur de la chambre (206) de sorte qu'un déplacement d'un piston (207) vers la base de la chambre (206) comprime les ressorts (204) entre le piston (207) et la base de la chambre (206).

7. Appareil selon la revendication 6, comprenant en outre
un raccord mâle (201) ; et
un raccord femelle (202), dans lequel la chambre (206) est disposée entre le raccord mâle (201) et le raccord femelle (202), la tige (205) est reliée mécaniquement à l'un du raccord mâle (201) et du raccord femelle (202), l'ouverture de la chambre (206) est reliée mécaniquement à l'autre du raccord mâle (201) et du raccord femelle (202), et l'éloignement du raccord mâle (201) du raccord femelle (202) provoque la compression des un ou plusieurs ressorts (204).

8. Appareil selon la revendication 7, dans lequel la flexion est une flexion multiaxiale de type faisceau (209) comprenant deux ou plusieurs ensembles de flexion, dans lequel ladite au moins une flexion est une flexion multiaxiale élastomère, dans lequel deux des deux ensembles de flexion ou plus sont reliés l'un à l'autre en formant un angle d'au moins 90 degrés.

9. Procédé de préparation d'un appareil de réduction de vibrations (1309) selon la revendication 1, comprenant les étapes successives suivantes :
détermination (1801) de forces axiales, rotationnelles, transversales et de pliage subies au niveau d'un premier emplacement sélectionné d'un câble électromécanique (1303) au sein d'une étendue de dévideur ;
détermination (1802) de fréquences pour les vibrations provoquées par les forces au niveau du premier emplacement sélectionné du câble électromécanique (1303) ;
sélection (1803) d'un ou de plusieurs ressorts sur la base des fréquences déterminées et des forces axiales et d'au moins une flexion sur la base de forces rotationnelles, transversales et de pliage de sorte à atténuer au moins une partie des vibrations provoquées par les forces au niveau du premier emplacement sélectionné du câble électrochimique pour réduire le bruit perçu par un composant capteur (1304) du câble électromécanique,
installation (805) d'un quelconque des un ou plusieurs ressorts sélectionnés dans la section de suppression de mouvement axial (203) et de l'au moins une flexion sélectionnée dans la section de suppression de mouvement de pliage et de rotation (208) pour former les une ou plusieurs sections élastiques accordées (1321) ;
jonction (1804) des une ou plusieurs sections élastiques accordées (1321) à un coupleur d'extrémité de tête (1320) à l'aide d'au moins une interface de matériau de haute impédance (1325) pour former l'appareil de réduction de vibrations (1309), moyennant quoi le coupleur d'extrémité de tête (1320) est adapté pour coupler l'appareil de réduction de vibrations à un composant d'un câble électromécanique (1303) ou d'un ensemble de remorquage (1302) et ladite au moins une interface de matériau de haute impédance (1325) crée une désadaptation d'impédance entre les une ou plusieurs sections élastiques accordées et le coupleur d'extrémité de tête pour inhiber la transmission d'énergie ; et
placement (1805) de l'appareil de réduction de vibrations (1309) au niveau du premier emplacement sélectionné le long du câble électromécanique au sein d'une étendue de dévideur.

10. Procédé selon la revendication 9, dans lequel les étapes du procédé selon la revendication 9 sont exécutées pour un second emplacement sélectionné du câble électromécanique pour préparer et installer un second appareil de réduction de vibrations au niveau du second emplacement sélectionné sur le câble électromécanique.

11. Procédé selon l'une quelconque des revendications 9 à 10, comprenant en outre
la détermination (802) d'une bande de tension pour les vibrations dans le câble électromécanique provoquées par les forces subies par le câble électromécanique ;
dans lequel les au moins un ou plusieurs ressorts sont sélectionnés pour produire une courbe de rigidité dégressive sur la base de la bande de tension déterminée.
